# FASCICULE DE BREVET EUROPEEN

(11) **EP 1 750 393 B1**
(45) Date de publication et mention de la délivrance du brevet: **06.04.2011**
(21) Numéro de dépôt: 06114767.4
(22) Date de dépôt: 31.05.2006
(51) Int. Cl.: H04W 24/02

(54) **Outil de diagnostic de réseau de communication, á exploitation de résultats de tests d'arbres diagnostic**
Kommunikationsnetz-Diagnosewerkzeug mittels Testsergebnisse einer Baumdiagnostik
Network communication diagnostic tool using test results of diagnostic tree

(30) Priorité: 07.06.2005 FR 0551520
(43) Date de publication de la demande: 07.02.2007
(73) Titulaire: Alcatel Lucent, 75008 Paris (FR)
(72) Inventeur: Brethereau, Alain, 78220, Viroflay (FR); Houiller, Jean-Roch, 91240, Saint Michel sur Orge (FR); De Mathan, Béatrix, 75016, Paris (FR)
(74) Mandataire: El Manouni, Josiane

(56) Documents cités:
- EP-A- 0 413 512
- EP-A- 1 146 689
- US-A- 5 428 619
- US-A- 5 539 869
- US-B1- 6 499 117

## Description

L'invention concerne le domaine des réseaux de communication, et plus particulièrement l'optimisation du fonctionnement et/ou de la configuration de tels réseaux.

Du fait des coûts de déploiement et de fonctionnement des réseaux de communication, il est dans l'intérêt des opérateurs de ces réseaux d'optimiser fréquemment leur fonctionnement et/ou leur configuration. Cela peut en effet leur permettre d'utiliser au mieux les ressources de communication de leur réseau, compte tenu, notamment, des accords de niveau de service qu'ils ont passés avec leurs clients utilisateurs, et/ou permettre la densification ou l'extension d'un réseau.

Pour optimiser un réseau et donc gérer l'utilisation de ses ressources, il faut disposer de données de fonctionnement et/ou de configuration du réseau, dites données d'analyse, comme par exemple des données de trafic qui définissent les trafics qui passent par les éléments de réseau, ou des paramètres de réseau, ou encore des indicateurs, par exemple de qualité de service (QoS).

Comme le sait l'homme de l'art, la gestion des paramètres (ou indicateurs) de réseau est une tâche difficile, complexe et de surcroît permanente en cas d'extension et/ou de densification du réseau. Cette gestion nécessite l'utilisation d'un système (ou outil) d'optimisation de réseau, comme par exemple celui appelé RNO® (pour « Radio Network Optimization »), développé par la société ALCATEL pour les réseaux radio cellulaires. Un tel système permet de suivre l'évolution de la qualité de service (ou QoS) au sein de certains éléments de réseau, comme par exemple des cellules, de diagnostiquer des causes de problèmes, notamment de qualité de service, et de proposer des solutions pour résoudre ces problèmes.

Pour effectuer les diagnostic et donc déterminer les causes de

l'origine d'un problème, certains outils de diagnostic, comme par exemple RNO®, utilisent des arbres de diagnostic. Il est rappelé qu'un arbre de diagnostic est une structure constituée de noeuds associés chacun à un(e) ou plusieurs tests (ou analyses) sur un réseau objet d'une étude et reliés entre eux par des branches représentatives de relations logiques entre tests, dites relations de causalité. Les feuilles (ou terminaisons) d'un arbre de diagnostic correspondent à des causes particulières de probléme (causes explicatives de l'origine d'un problème), les noeuds pères de ces feuilles correspondent aux causes de ces causes particulières, et ainsi de suite jusqu'à ce que l'on atteigne le noeud racine dé l'arbre qui correspond à une cause racine correspondant au problème racine à expliquer.

Pour déterminer chaque cause particulière à l'origine d'un problème (racine), l'outil de diagnostic parcourt l'arbre de diagnostic, qui correspond à ce problème en partant de son noeud racine et en allant vers un ou plusieurs de ses noeuds feuilles. Les résultats des tests définis en chaque noeud du parcours sont censés permettre de déterminer précisément chaque cause d'un problème, afin de pouvoir y remédier efficacement.

Des exemples d'outils de diagnostic sont décrits par exemple dans les documents US-A-5 428 619, US-B1-6 499 117, US-A-5 539 869.

Ces arbres de diagnostic sont très puissants. Cependant, du fait de la grande complexité des réseaux, ils sont généralement très complexes à concevoir et a utiliser, et l'exploitation de leurs résultats est souvent difficile.

Par ailleurs, les arbres de diagnostic sont rarement optimaux dès leur première utilisation dans un réseau, notamment du fait qu'il est difficile, voire impossible, actuellement de les tester lorsqu"ils sont en cours d'élaboration compte tenu du nombre de valeurs d'analyse qui doit être pris en considération. De ce fait, des experts doivent régulièrement procéder à l'optimisation des arbres de diagnostic afin d'en améliorer la précision et donc permettre des actions correctives appropriées. Ces optimisations requérant l'analyse de très nombreux rapports de diagnostic (délivrés par l'outil de diagnostic) et une connaissance poussée du fonctionnement du réseau concerné, elles peuvent être longues et donc retarder la découverte de l'origine, d'un problème réseau et la mise en oeuvre de la solution correspondante.

L'invention a donc pour but d'améliorer la situation, notamment dans le cas des réseaux de communication radio.

Elle propose à cet effet un outil de diagnostic, pour un réseau de communication, chargé d'analyser des données de fonctionnement et/ou de configuration du réseau, dites données d'analyse, au moyen d'arbres de diagnostic, afin de délivrer des rapports de diagnostic décrivant des causes de problème(s) au sein du réseau.

Cet outil de diagnostic se caractérise par le fait qu'il comprend :
- des moyens de traitement chargés, lorsqu'une partie au moins d'un arbre de diagnostic est utilisée pour un test, d'associer à certains au moins des noeuds et/ou liens de cette partie utilisée, des données d'information représentatives du résultat du test du noeud ou lien considéré et correspondant à des niveaux d'importance choisis, et
- des moyens d'affichage chargés d'afficher sélectivement (sur un écran) une représentation graphique des noeuds et/ou liens de la partie utilisée représentative d'une partie au moins des résultats du test effectué, fonction d'au moins un niveau d'importance choisi.

L'outil de diagnostic selon l'invention peut comporter d'autres caractéristiques qui peuvent être prises séparément ou en combinaison, et notamment :
- il peut comprendre des moyens de contrôle chargés d'effectuer des tests (de validation) dans des arbres de diagnostic en cours d'élaboration et de délivrer les résultats de ces tests aux moyens de traitement. Dans ce cas, les moyens d'affichage sont chargés d'afficher sélectivement (sur un écran) une représentation graphique des noeuds et/ou liens d'au moins une partie testée de l'arbre de diagnostic en cours d'élaboration, représentative d'une partie au moins des résultats du test effectué, fonction d'au moins un niveau d'importance choisi ;
- il peut comprendre des moyens d'interfaçage homme/machine chargés de permettre à un utilisateur de sélectionner un noeud affiché et d'afficher en retour un menu contextuel permettant d'accéder au moins à la description de ce noeud sélectionné et à des valeurs de données d'analyse utilisées lors du test pour ce noeud ;
   ➢ ses moyens d'interfaçage homme/machine peuvent être chargés de permettre l'affichage en retour (sur l'écran) d'une représentation graphique d'un noeud affiché et des noeuds qui dépendent de ce dernier, représentative d'une partie au moins des résultats du test sur ce noeud et sur les noeuds dépendant, fonction d'au moins un niveau d'importance choisi ;
   ➢ ses moyens d'interfaçage homme/machine peuvent être chargés de permettre à un utilisateur de positionner un curseur sur un noeud affiché et d'afficher en retour toutes les données d'information représentatives du résultat du test de ce noeud ;
   ➢ ses moyens d'interfaçage homme/machine peuvent être chargés de permettre à un utilisateur de sélectionner un noeud affiché d'un arbre de diagnostic en cours d'élaboration afin de placer un marqueur d'arrêt au niveau de ce noeud, puis de choisir au moins une valeur de donnée d'analyse à imposer au niveau de ce noeud sélectionné et/ou d'au moins un autre noeud de l'arbre de diagnostic auquel il appartient. Dans ce cas, les moyens de contrôle sont chargés d'effectuer un test sur au moins un noeud choisi de l'arbre de diagnostic en cours d'élaboration compte tenu des valeurs de données d'analyse imposées en chacun de ses noeuds, et de délivrer les résultats du test aux moyens de traitement afin qu'une partie au moins des résultats puissent être affichée sous la forme d'une représentation graphique (par les moyens d'affichage) ;
      - ses moyens d'interfaçage homme/machine peuvent être chargés de permettre à un utilisateur de définir certaines au moins des valeurs de données d'analyse à imposer et/ou de choisir certaines au moins des valeurs de donnée d'analyse parmi des valeurs de données d'analyse réelles stockées dans des moyens de mémorisation ;
      - ses moyens de contrôle peuvent être chargés d'effectuer un test en mode pas à pas et de communiquer les résultats de chaque pas du test aux moyens de traitement afin qu'une partie au moins des résultats de chaque pas puisse être affichée sous la forme d'une représentation graphique (par les moyens d'affichage) ;
- le niveau d'importance choisi est par exemple initialement le niveau le plus élevé ;
   ➢ la précision des données d'information peut par exemple croître lorsque le niveau d'importance correspondant décroît ;
   ➢ les données d'information correspondant au niveau d'importance le plus élevé peuvent être choisies parmi des types de noeud, des types de résultat de test au niveau d'un noeud, des types de données d'analyse testées, et des types de relation entre noeuds voisins ;
      - les différents types de noeud peuvent être choisis parmi un premier noeud, un noeud disposant d'une proposition d'action correctrice, un noeud disposant d'une proposition de test externe, un noeud dédié exclusivement au test, et un noeud lié à un autre arbre de diagnostic ;
      - les différents types de noeud peuvent être représentés par des formes géométriques différentes ;
      - les différents types de résultat de test au niveau d'un noeud peuvent être choisis parmi un test localement positif, un test localement négatif, un test localement impossible à effectuer, et un test localement non effectué ;
      - les différents types de résultat de test au niveau d'un noeud peuvent être représentés par des couleurs différentes ;
      - les différents types de données d'analyse testées peuvent être par exemple choisis parmi des données géographiques, une valeur de paramètre, une information de classe, des données de qualité de service ou de trafic, des données de topologie de réseau et des alarmes (cette liste est non exhaustive) ;
      - les différents types de données d'analyse testées peuvent être représentés par des signes (ou symboles) différents ;
      - les différents types de relation entre noeuds voisins peuvent être représentés par des types de trait différents.

L'invention est particulièrement bien adaptée, bien que de façon non exclusive, aux réseaux de communication radio, notamment de type cellulaire (ou mobile), quel que soit leur standard (par exemple GSM, GPRS, EDGE, UMTS, WiMax ou multi-standards). Elle concerne d'une manière générale tout type de réseau de communication, y compris les réseaux fixes commutés (plus connus sous les acronymes anglais POTS (pour « Plain Old Telephone Service ») et PSTN (pour « Public Switched Telephony Network »)), ainsi que les réseaux locaux filaires (plus connus sous l'acronyme anglais LAN (pour « Local Area Network »)) ou sans fil (plus connus sous l'acronyme anglais WLAN (pour « Wireless LAN »)).

D'autres caractéristiques et avantages de l'invention apparaîtront à l'examen de la description détaillée ci-après, et des dessins annexés, sur lesquels :
- la figure 1 illustre de façon schématique et fonctionnelle une partie d'un réseau de communication équipé d'un outil de diagnostic selon l'invention, implanté dans un système de gestion de réseau,
- la figure 2 illustre de façon schématique une partie d'un exemple de représentation graphique de résultats de premier niveau d'un test effectué sur un réseau avec un arbre de diagnostic, ainsi qu'un exemple de légende définissant les conventions utilisées pour élaborer les représentations graphiques ; la représentation utilise des symboles (et signes) destinés à fournir des informations explicites immédiatement accessibles,
- la figure 3 illustre de façon schématique un exemple de représentation graphique d'un menu contextuel associé au noeud « Drop BSS » de la figure 2, et un exemple de représentation graphique d'un tableau d'information correspondant à l'option « Information noeud » de ce menu contextuel,
- la figure 4 illustre de façon schématique un exemple de représentation graphique des résultats de deuxième niveau du test, relatifs au noeud « Drop BSS » de la figure 2,
- la figure 5 illustre de façon schématique un exemple de représentation graphique d'un menu contextuel associé à l'un des noeuds, d'un groupe de noeuds dont l'un s'appelle « C » (pour couverture ou « coverage »), de la figure 2 ; la représentation montre le noeud C pour différentes cellules auxquelles le test « noeud C » est appliqué,
- la figure 6 illustre de façon schématique un exemple de représentation graphique de résultats de premier niveau d'un test de validation appliqué à un noeud (« C ») d'une partie d'un arbre de diagnostic en cours d'élaboration,
- la figure 7 illustre de façon schématique deux exemples de représentation graphique des résultats de deuxième niveau d'un test de validation appliqué au noeud « Drop BSS » de la figure 6, pour deux valeurs différentes de l'indicateur « call drop BSS rate » (0,8% et 3%) ; ces deux exemples montrent la modification de la valeur d'un indicateur (ici « call drop BSS rate ») sur un test d'un noeud (ici « Drop BSS »), et l'influence de cette modification,
- la figure 8 illustre de façon schématique un exemple de représentation graphique d'un menu contextuel associé au noeud « Drop BSS » de la figure 6, et
- la figure 9 illustre de façon schématique un exemple de représentation graphique de résultats de premier niveau d'un test de validation, effectué en mode pas à pas, avec la partie d'arbre de diagnostic en cours d'élaboration illustrée sur la figure 6.

Les dessins annexés pourront non seulement servir à compléter l'invention, mais aussi contribuer à sa définition, le cas échéant.

L'invention a pour objet de permettre la simplification de l'utilisation et de l'exploitation des résultats des arbres de diagnostic des outils de diagnostic de réseau de communication, ainsi qu'éventuellement la simplification de la conception de ces arbres de diagnostic.

Dans ce qui suit, on considère à titre d'exemple non limitatif que le réseau de communication est un réseau radio cellulaire (ou mobile), comme par exemple un réseau GSM, ou GPRS/EDGE, ou UMTS, ou WiMax, ou encore un réseau multi-standards. Par conséquent, les ressources sont ici des canaux radio. Mais, l'invention est adaptée à tout type de réseau de communication, et notamment aux réseaux fixes commutés (POTS ou PSTN), aux réseaux locaux filaires (LAN) ou sans fil (WLAN).

Il est rappelé qu'un réseau radio cellulaire RC peut être schématiquement résumé à un réseau de commutation (ou « Core Network ») couplé à un réseau d'accès radio (appelé UTRAN dans le cas d'un réseau UMTS et BSS dans le cas d'un réseau GSM), lui-même raccordé à un système de gestion de réseau NMS (pour « Network Management System »). Le réseau d'accès radio comporte des stations de base (appelées Node Bs dans le cas d'un réseau UMTS et BTSs dans le cas d'un réseau GSM) et des contrôleurs de réseau radio (appelés RNCs dans le cas d'un réseau UMTS et BSCs dans le cas d'un réseau GSM), raccordés entre eux ainsi qu'à un gestionnaire de réseau d'accès.

On considère également dans ce qui suit, à titre d'exemple non limitatif, que l'outil de diagnostic est dédié à la qualité de service, et que de ce fait il dispose d'arbres de diagnostic associés chacun à un type de problème de qualité de service (ou QoS). Mais, l'invention n'est pas limitée à ce seul type de diagnostic. Elle concerne en effet tous les types de diagnostic pouvant être effectués au sein d'un réseau, et notamment les diagnostics relatifs au service (comme par exemple la qualité de service ou QoS) et les diagnostics relatifs à l'infrastructure du réseau (comme par exemple la connectivité entre cellules d'un réseau GSM (gestion des « handovers » - transferts entre cellules)).

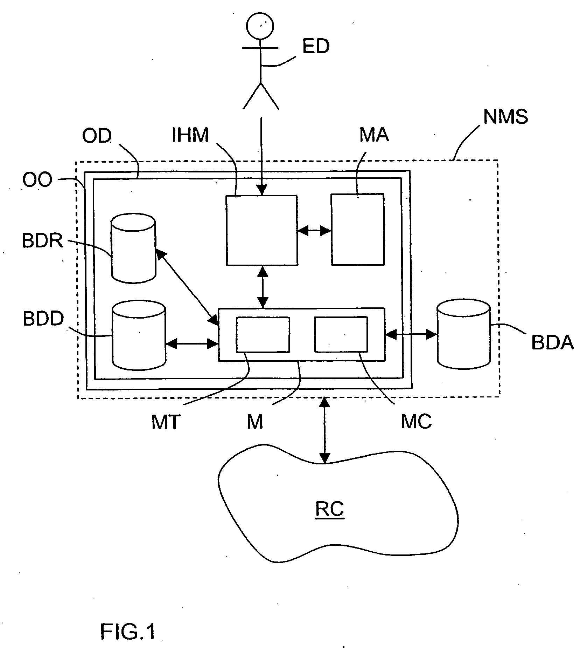

On a schématiquement représenté sur la figure 1 un outil de diagnostic OD. Un tel outil OD comprend généralement une base de données de diagnostic BDD, dans laquelle se trouvent stockées des données définissant des arbres de diagnostic, et un module (ou moteur) de diagnostic MD, chargé d'analyser au moyen des arbres de diagnostic les données de fonctionnement et/ou de configuration du réseau RC, dites données d'analyse, afin de délivrer des rapports de diagnostic qui décrivent des causes de problème(s) survenu(s) dans le réseau RC.

On entend ici par « données d'analyse » des données de trafic, ou des paramètres de réseau, ou encore des indicateurs, par exemple de qualité de service (QoS). Par ailleurs, on entend ici par « données de trafic » des valeurs de paramètre(s) ou d'indicateur(s) pouvant être mesurées ou estimées par le système de gestion de réseau NMS. En outre, on entend ici par « élément de réseau » tout constituant (physique et/ou logique) d'un réseau par lequel passent des trafics définis localement par des valeurs de paramètre(s) ou d'indicateur(s). Il pourra donc s'agir, par exemple, d'une cellule dans laquelle des terminaux mobiles peuvent établir ou poursuivre des communications, ou d'un équipement de réseau, tel qu'un routeur, une station de base (Node B ou BTS), ou un contrôleur de réseau radio (RNC ou BSC).

Comme indiqué dans la partie introductive, un arbre de diagnostic comprend des noeuds qui sont chacun associés à un ou plusieurs tests de réseau et qui sont reliés entre eux (selon une relation de dépendance « père-fils ») par des branches qui représentent des relations logiques entre tests (ou relations de causalité). Les tests sont destinés à analyser les données d'analyse. Ces dernières peuvent être agrégées pour un équipement de réseau ou pour un ensemble d'équipements de réseau. Les noeuds feuilles (ou terminaisons) d'un arbre de diagnostic correspondent à différentes causes possibles d'un problème (racine) donné de fonctionnement ou de configuration du réseau RC. Les noeuds pères des noeuds feuilles correspondent aux causes de leurs causes, et ainsi de suite jusqu'à ce que l'on atteigne le noeud racine de l'arbre de diagnostic qui correspond à une cause racine qui est l'expression d'un problème (racine) donné.

Les données définissant les arbres de diagnostic sont généralement fournies à la base de données de diagnostic BDD par un expert ED. Par ailleurs, les données d'analyse du réseau RC sont généralement stockées dans une base de données d'analyse BDA du NMS.

Les données définissant les résultats des tests effectués par le moteur de diagnostic MD sont généralement stockées dans une base de données de résultat BDR.

Dans l'exemple de réalisation illustré, non limitatif, l'outil de diagnostic OD est intégré dans un système (ou outil) d'optimisation et/ou de gestion et/ou de supervision de réseau OO, comme par exemple le système RNO® présenté dans la partie introductive, lui-même implanté dans le NMS du réseau RC. Mais, cela n'est pas une obligation.

Selon l'invention, l'outil de diagnostic OD comprend également au moins un module de traitement MT couplé à un module d'affichage MA.

Le module de traitement MT est chargé, chaque fois que le moteur de diagnostic MD a utilisé une partie au moins d'un arbre de diagnostic pour effectuer un test sur des données d'analyse du réseau RC, d'associer à certains au moins des noeuds et/ou liens de cette partie d'arbre utilisée, des données d'information qui représentent le résultat du test de chaque noeud ou lien considéré et qui correspondent à des niveaux d'importance choisis.

Par exemple, la précision des données d'information qui sont associées à un noeud ou un lien croît lorsque le niveau d'importance correspondant décroît. En d'autres termes, les informations du niveau le plus élevé sont celles qui sont les plus générales (et donc les plus représentatives d'un résultat), les autres informations (de niveaux d'importance inférieurs ou plus détaillés et plus rarement utilisés) ne venant que détailler ou préciser celles du niveau d'importance le plus élevé.

A titre d'exemple non limitatif, les données d'information qui correspondent au niveau d'importance le plus élevé peuvent être le type de noeud, le type de résultat de test au niveau d'un noeud, le type de données d'analyse testées, et/ou le type de relation entre noeuds voisins.

Le module de traitement MT associe donc des identifiants de niveau d'importance aux différentes données d'information (ou données de résultat) qui proviennent d'un test effectué. Les données d'information et les identifiants de niveau d'importance associés sont ensuite stockés dans la base de données de résultat BDR en correspondance des identifiants des noeuds correspondants.

Comme cela est illustré sur la figure 1, le module de traitement MT est par exemple implanté dans le moteur de diagnostic MD.

Le module d'affichage MA est chargé d'afficher sélectivement une représentation graphique des noeuds et/ou liens de la partie d'arbre utilisée, laquelle représente une partie au moins des résultats du test effectué, choisie en fonction d'au moins un niveau d'importance. Il comprend à cet effet un écran ou tout autre moyen d'affichage.

L'utilisateur peut choisir le (ou les) niveau(x) d'importance des données d'information qu'il souhaite utiliser pour chacune des représentations graphiques qu'il souhaite visualiser sur son écran. Mais, on peut également envisager que la première représentation graphique soit automatiquement constituée à partir des données d'information correspondant au niveau le plus élevé, puis que l'utilisateur décide du niveau d'importance des données d'information qu'il souhaite utiliser dynamiquement pour les représentations graphiques suivantes.

Préférentiellement et comme illustré sur la figure 1, l'outil de diagnostic OD comporte une interface homme/machine IHM couplant le moteur de diagnostic MD (et donc le module de traitement MT) au module d'affichage MA. Cette interface homme/machine IHM comporte par exemple un clavier de saisie et une souris et/ou un écran tactile. Elle est notamment destinée à permettre à l'utilisateur de choisir un ou plusieurs niveaux d'importance, et, comme on le verra plus loin, de sélectionner des noeuds et/ou liens et des options au sein de menus contextuels.

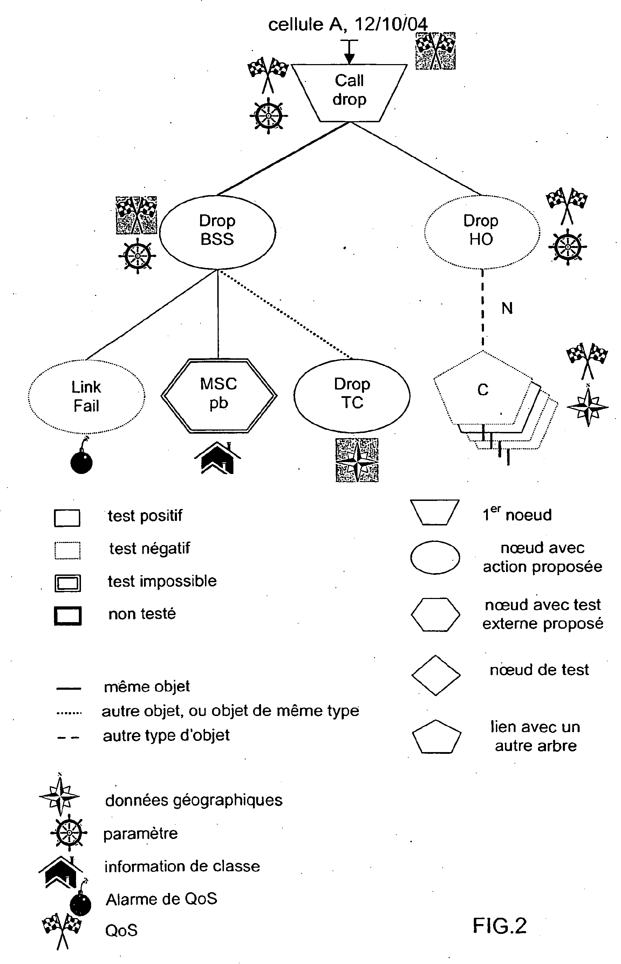

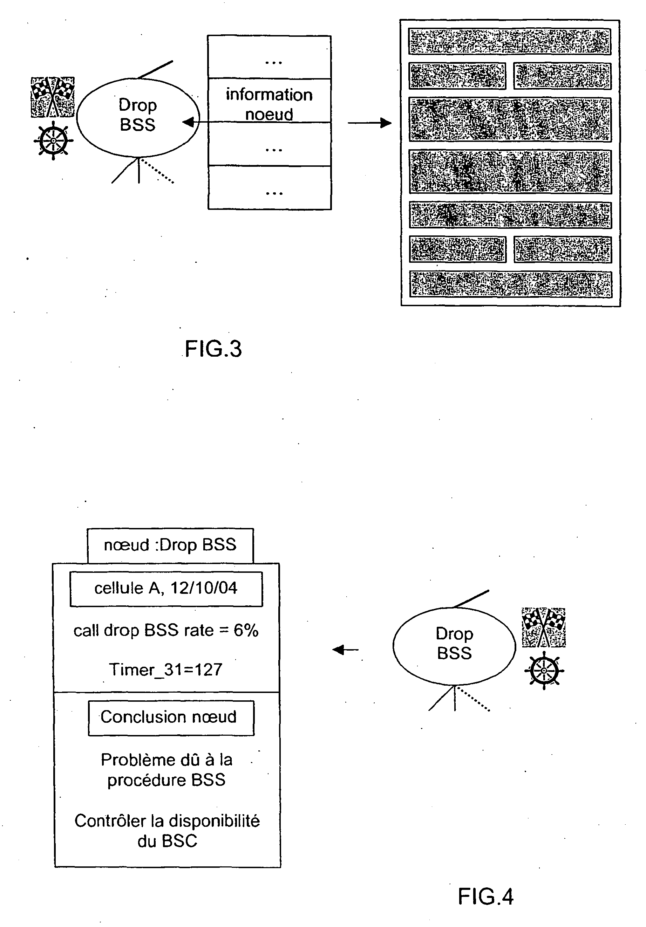

On a schématiquement représenté sur la figure 2 un exemple de représentation graphique de résultats de premier niveau (le plus élevé) d'un test effectué sur un réseau RC avec un arbre de diagnostic. Ici, seule une petite partie de l'arbre est représentée. La légende qui est placée en-dessous de l'arbre définit un exemple de convention utilisée pour élaborer la représentation graphique de la figure 2, ainsi que toutes celles illustrées sur les figures 3 à 9.

Selon cet exemple de convention :
- les noeuds sont matérialisés par des formes géométriques qui différent selon leurs types respectifs. Par exemple, le premier noeud d'une représentation graphique est représenté par un trapèze « inversé », un noeud pour lequel a été déterminée une proposition d'action correctrice est représenté par une ellipse, un noeud pour lequel existe une proposition de test externe est représenté par un hexagone, un noeud dédié exclusivement au test est représenté par un losange, et un noeud lié à un autre arbre de diagnostic que celui affiché est représenté par un pentagone. On entend ici par « test externe » un test qui est externe au diagnostic, comme par exemple une mesure radio sur le terrain ;
- en plus de leur forme fonction de leur type, et bien entendu de leur nom, les noeuds peuvent être différenciés par le type de résultat du test qui a été effectué avec chacun d'entre eux. Par exemple, les différents types de résultat de test peuvent correspondre à des couleurs différentes, ou bien comme illustré par des types différents de ligne d'encadrement de forme géométrique. Ainsi dans l'exemple illustré un test localement positif (réussi) au niveau d'un noeud est signalé par une ligne d'encadrement fine, un test localement négatif est signalé par une ligne d'encadrement en pointillés, un test qu'il a été impossible d'effectuer localement au niveau d'un noeud (par manque de données) est signalé par une ligne d'encadrement double, et un test qui n'a pas été effectué localement au niveau d'un noeud est signalé par une ligne d'encadrement épaisse. Au lieu de lignes de types différents on peut utiliser des couleurs différentes ;
- les données d'analyse qui sont testées par un noeud sont matérialisées par des signes (ou symboles) différents qui différent selon leurs types respectifs. Par exemple, des données géographiques sont signalées par un symbole de type « boussole » (voir figure 2), une valeur de paramètre est signalée par un symbole de type « barre de bateau » (voir figure 2), une information de classe est signalée par un symbole de type « toit de maison » (voir figure 2), une alarme de qualité de service est signalée par un symbole de type « boulet allumé» (voir figure 2), et des données de qualité de service (QoS) sont signalées par un symbole de type « drapeaux croisés » (voir figure 2). Un ou plusieurs signes (ou symboles) différents peuvent être associés à un même noeud ;
- les relations entre noeuds voisins sont matérialisées par des traits qui différent selon leurs types respectifs. Par exemple, la liaison entre deux noeuds voisins portant sur un même objet peut être matérialisée par un trait continu simple, la liaison entre deux noeuds voisins portant sur des objets différents ou sur un même type d'objet peut être matérialisée par un trait en pointillés, et la liaison entre deux noeuds voisins portant sur des objets de types différents peut être matérialisée par un trait discontinu. On entend ici par « objet » tout élément de réseau ou de topologie de réseau (par exemple un Node B, une BTS, une cellule ou une adjacence). Une mauvaise qualité sur un élément de réseau peut être provoquée par un problème survenu au niveau d'un autre élément de ce réseau, du même type ou d'un type différent (par exemple, de fortes interférences au sein d'une cellule objet d'un fort trafic va reporter une partie du trafic vers des cellules voisines et peut provoquer la congestion de ces cellules voisines, ou bien un problème de codage/décodage au niveau d'un BSC peut amplifier un problème d'interférence au niveau des cellules contrôlées par ce BSC).

Bien entendu, il ne s'agit ici que d'exemples non limitatifs de formes, traits, couleurs et symboles (ou signes) parmi de très nombreux autres exemples. D'une manière générale tout type de codification de nature à permettre la différenciation des types de données d'information résultant des tests peut être envisagé.

Il est important de noter que sur les différentes figures les symboles ont été placés à côté des noeuds, mais ils peuvent être également placés à l'intérieur desdits noeuds.

La portion d'arbre de diagnostic illustrée sur la figure 2 est destinée à déterminer l'origine d'interruptions d'appels survenues au niveau d'une cellule A, le 12/10/04. Il s'agit d'un exemple d'analyse de problèmes avec un exemple de causes possibles testées. Selon les conventions précitées, la portion d'arbre de diagnostic illustrée sur la figure 2 comprend :
- un premier noeud appelé « Call drop », dédié aux interruptions d'appels, pour lequel le test a été positif, et pour lequel on dispose de données d'information de type données de qualité de service (QoS), alarmes, données géographiques et paramètres,
- un noeud appelé « Drop BSS », correspondant à des interruptions d'appels dues au réseau d'accès radio BSS, pour lequel le test a été positif, et pour lequel on dispose de données d'information de type données de qualité de service (QoS), alarmes, données géographiques et paramètres. Ce noeud est lié au premier noeud « Call drop » par un trait continu simple indiquant que ces deux noeuds portent sur un même objet,
- un noeud appelé « Link fail », correspondant à des échecs de liaison, pour lequel le test a été négatif, et pour lequel on dispose de données d'information de type alarmes et données géographiques. Ce noeud est lié au noeud « Drop BSS » par un trait continu simple indiquant que ces deux noeuds portent sur un même objet,
- un noeud appelé « MSC pb », correspondant à des problèmes au niveau d'un centre de gestion d'appels (ou MSC), et qu'il n'a pas été possible d'appliquer. Ce noeud est lié au noeud « Drop BSS » par un trait continu simple indiquant que ces deux noeuds portent sur un même objet,
- un noeud appelé « Drop TC », correspondant à des interruption liées au transcodage mis en oeuvre dans les contrôleurs de réseau radio (RNC ou BSC), pour lequel le test a été positif, et pour lequel on dispose de données d'information de type alarmes. Ce noeud est lié au noeud « Drop BSS » par un trait en pointillés indiquant que ces deux noeuds portent sur des objets différents ou des objets de même type,
- un noeud appelé « Drop HO », correspondant à des interruptions d'appels dues à des procédures de transfert entre cellules (ou « handover »), pour lequel le test a été négatif, et pour lequel on dispose de données d'information de type alarmes. Ce noeud est lié au premier noeud « Call drop » par un trait continu simple indiquant que ces deux noeuds portent sur un même objet,
- un groupe de noeuds « C » (pour couverture ou « coverage »), correspondant à des problèmes de continuité radio liés à la couverture des cellules, pour trois desquels le test a été négatif et pour un quatrième positif, et pour lequel on dispose de données d'information de type alarmes. Ce groupe de noeuds est lié au noeud « Drop HO » par un trait discontinu indiquant qu'ils portent sur des objets de types différents.

Grâce à l'interface homme/machine IHM l'utilisateur peut accéder à toutes les données d'information de l'un au moins des noeuds affichés sur l'écran, ainsi qu'aux données qui le(s) décrivent complètement. Cette accession peut par exemple se faire en sélectionnant un noeud affiché sur l'écran en positionnant le curseur de la souris sur lui, et éventuellement en « cliquant » avec l'un des deux actionneurs (ou « clics ») de cette souris.

Comme cela est illustré sur la figure 3, la sélection d'un noeud (ici « Drop BSS »), en cliquant à son niveau au moyen de la souris, peut entraîner l'affichage sur l'écran de ce seul noeud et par exemple l'apparition à côté de ce noeud d'un menu contextuel offrant une ou plusieurs options. Par exemple en sélectionnant l'option « noeud information » du menu on provoque l'affichage sur l'écran d'une page comportant des champs (rectangles gris) décrivant complètement le noeud.

Les données qui sont ici affichées ne sont pas obligatoirement des données d'information associées au noeud concerné par le module de traitement MT consécutivement à l'application du (ou des) test(s) de ce noeud, et donc représentatives du résultat du (des) test(s). Il peut s'agir d'informations complémentaires.

Pour permettre cet affichage, l'interface homme/machine IHM accède à la base de données de résultat BDR ou bien à la base de données de diagnostic BDD afin d'extraire les données requises (sélectionnées) qui sont stockées en correspondance de l'identifiant du noeud sélectionné.

Comme cela est illustré sur la figure 4, la sélection d'un noeud (ici « Drop BSS »), en positionnant dessus le curseur de la souris, peut entraîner l'affichage sur l'écran à côté de ce noeud de fenêtres contenant les données d'information de (second) niveau d'importance inférieur au niveau le plus élevé. L'utilisateur dispose alors sur son écran de toutes les données d'information obtenues consécutivement à l'application d'un test sur un noeud sélectionné.

Dans l'exemple illustré sur la figure 4, la fenêtre mentionne i) le nom du noeud sélectionné (« Drop BSS »), ii) la cellule dans laquelle sont survenues les interruptions d'appel (ici la cellule A) et la date à laquelle sont survenues ces interruptions d'appel (ici le 12/10/04), iii) l'indicateur (ou paramètre) analysé (donnée d'analyse), ici le taux d'interruption d'appel dû au BSS - ou « call drop BSS rate ») et la valeur de cet indicateur (ici égale à 6%), iv) la conclusion sur l'origine du problème (ici le BSS est considéré comme responsable du problème), et v) une proposition d'action pour résoudre le problème (ici on propose de contrôler la disponibilité des contrôleurs de réseau radio BSC).

Pour permettre cet affichage, l'interface homme/machine IHM accède à la base de données de résultat BDR afin d'extraire les données d'information de (seconds) niveaux d'importance inférieurs au niveau le plus élevé et qui sont stockées en correspondance de l'identifiant du noeud sélectionné.

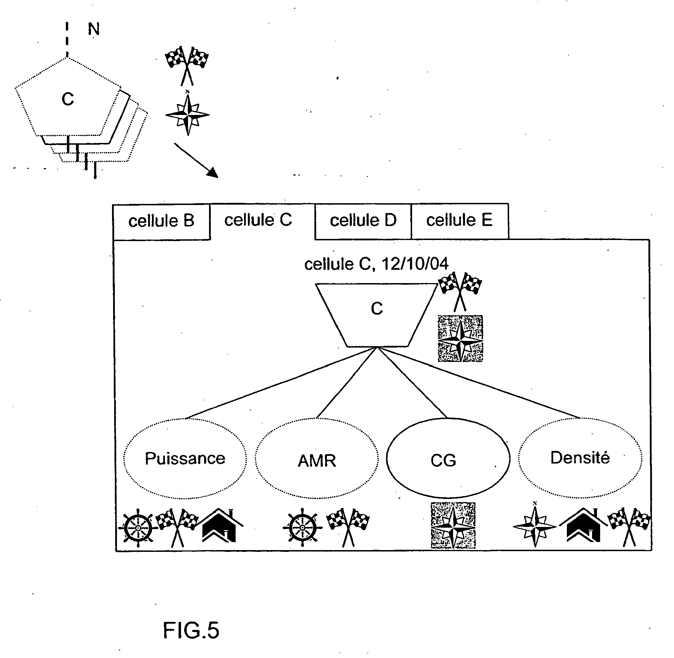

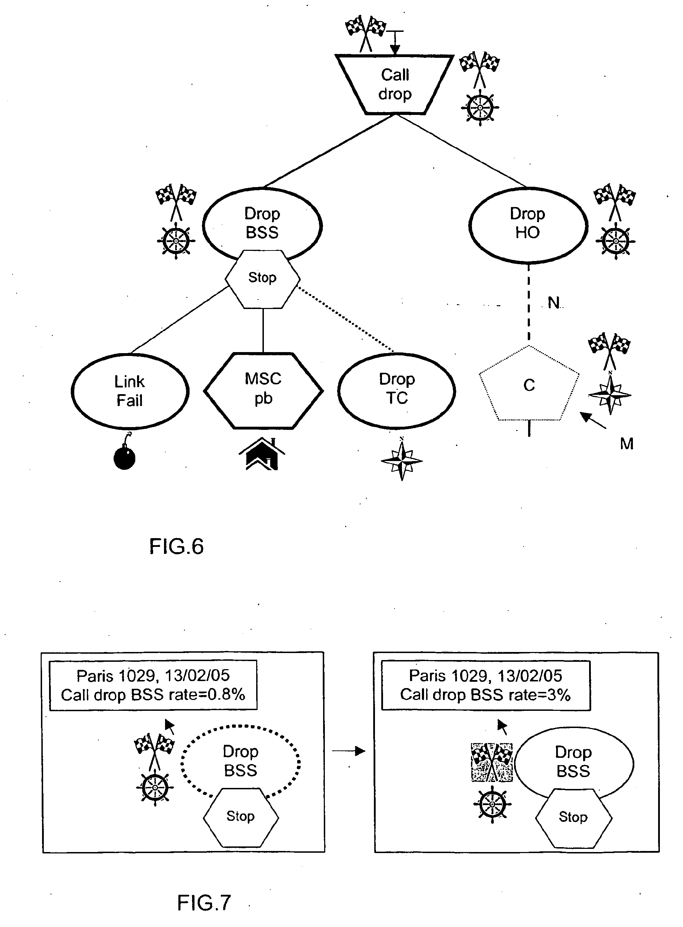

Comme cela est illustré sur la figure 5, il est également possible d'effectuer une double sélection au moyen de la souris, afin de sélectionner un noeud parmi un groupe de noeuds. Ici, on a tout d'abord sélectionné le groupe de quatre noeuds de couverture « C » de l'arbre de la figure 6, dédié respectivement aux couvertures des cellules B, C, D et E, par exemple en cliquant dessus avec l'un des clics de la souris. Cette première sélection a provoqué l'affichage sur l'écran d'un menu contextuel proposant d'accéder à la représentation graphique du noeud de couverture « C » de l'une des quatre cellules B, C, D et E, ainsi qu'aux noeuds qui en dépendent. Puis, en sélectionnant l'une des quatre cellules B, C, D et E, ici la cellule C, par exemple en cliquant dessus avec l'un des clics de la souris, on provoque l'affichage sur l'écran, à côté du groupe de noeuds « C », de la représentation graphique du noeud de couverture dédié à la cellule C (le jour pour lequel on réalise l'analyse-diagnostic, ici le 12/10/04) et des noeuds qui en dépendent.

Cette dernière représentation graphique est de préférence effectuée selon les mêmes conditions que celles utilisées pour le tout premier affichage (voir figure 2). Ainsi, dans l'exemple illustré, on affiche sur l'écran le nom de la cellule (ici la cellule C), la date à laquelle le test a été effectué (ici le 12/10/04), le premier noeud sélectionné (« coverage ») et les noeuds qui sont couplés à ce dernier, ici appelés « puissance », « AMR », « CG » et « densité ».

Le noeud de couverture sélectionné est de type premier noeud, ce qui se traduit par une forme en trapèze inversé, et le résultat du (des) test(s) qui a (ont) été effectué(s) à son niveau est positif (ligne d'encadrement continue simple).

Le noeud « puissance » est dédié aux problèmes de puissance d'émission de la station de base (BTS ou Node B) de la cellule C. Le résultat du (des) test(s) qui a (ont) été effectué(s) est négatif (ligne d'encadrement en pointillés), et sa représentation sous forme elliptique indique qu'il est associé à une proposition d'action correctrice.

Le noeud « AMR » est dédié aux problèmes de codage radio de type AMR au niveau de la cellule C. Le résultat du (des) test(s) qui a (ont) été effectué(s) est négatif (ligne d'encadrement en pointillés), et sa représentation sous forme elliptique indique qu'il est associé à une proposition d'action correctrice.

Le noeud « CG » est dédié aux problèmes de trou de couverture au niveau de la cellule C. Le résultat du (des) test(s) qui a (ont) été effectué(s) est positif (ligne d'encadrement en trait continu simple), et sa représentation sous forme elliptique indique qu'il est associé à une proposition d'action correctrice.

Le noeud « densité » est dédié aux problèmes de congestion de trafic au niveau de la cellule C. Le résultat du (des) test(s) qui a (ont) été effectué(s) est négatif (ligne d'encadrement en pointillés), et sa représentation sous forme elliptique indique qu'il est associé à une proposition d'action correctrice.

Il est également possible d'accéder aux autres données d'information relatives à chacun des noeuds affichés sur la figure 5, ainsi qu'à leurs données complémentaires (par exemple les données de description), en procédant comme indiqué précédemment en référence aux figures 3 et 4.

Comme cela est illustré sur la figure 1, l'outil de diagnostic OD, selon l'invention, peut également comprendre un module de contrôle MC chargé d'effectuer des tests (de validation) sur des arbres de diagnostic en cours d'élaboration et de délivrer les résultats de ces tests au module de traitement MT afin qu'il les associe à certains au moins des noeuds et/ou liens de l'arbre concerné, sous la forme de données d'information, et à des identifiants de niveau d'importance.

Les données d'information et les identifiants de niveau d'importance associés peuvent être ensuite, éventuellement, stockés dans une base de données, par exemple une partie de la base de données de résultat BDR dédiée à la validation, en correspondance des identifiants des noeuds correspondants. En variante on pourrait utiliser une mémoire dédiée pour stocker les résultats de validation de façon séparée des résultats réels.

Le module de contrôle MC est par exemple implanté dans le moteur de diagnostic MD.

Grâce au module d'affichage MA et à l'interface homme/machine IHM on peut afficher sélectivement sur l'écran la représentation graphique des noeuds et/ou liens d'au moins une partie testée d'un arbre de diagnostic en cours d'élaboration. Comme dans le cas des résultats réels, cette représentation graphique représente tout ou partie des résultats du test effectué en fonction d'au moins un niveau d'importance choisi.

Tout ce qui a été dit précédemment pour l'affichage des représentations graphiques des résultats réels s'applique de la même façon aux résultats de validation. Par exemple, l'interface homme/machine IHM peut permettre à un utilisateur de positionner le curseur de sa souris (ou de tout moyen de sélection équivalent) sur un noeud affiché afin de provoquer l'affichage de toutes les données d'information qui représentent le résultat du test de ce noeud.

Cependant, l'interface homme/machine IHM offre des possibilités supplémentaires dans le cas de la validation.

Par exemple, l'interface homme/machine IHM peut permettre à un utilisateur de sélectionner un noeud d'un arbre de diagnostic en cours d'élaboration (affiché sur l'écran) afin de placer un marqueur d'arrêt au niveau de ce noeud, puis de choisir au moins une valeur de donnée d'analyse à imposer au niveau de ce noeud sélectionné et/ou d'au moins un autre noeud de l'arbre de diagnostic auquel il appartient. Une telle situation est illustrée sur les figures 6 à 8.

Dans l'exemple illustré sur la figure 6, la portion d'arbre de sélection en cours d'élaboration est identique à celle présentée ci-avant en référence à la figure 2. Ici, les lignes d'encadrement des formes géométriques matérialisant les noeuds (sauf « C ») sont des traits continus épais du fait que ces noeuds n'ont pas encore été testés.

Ici, l'utilisateur décide de sélectionner le noeud « Drop BSS » afin de lui associer un marqueur d'arrêt, ici matérialisé par le panneau « Stop ». Ce panneau sert à montrer à quel endroit on veut arrêter le déroulement de l'analyse afin d'éventuellement forcer l'analyse d'une branche qui, sinon, n'aurait pas été analysée. Cela peut se faire, par exemple, en cliquant sur le noeud puis en sélectionnant dans un menu contextuel qui s'affiche en retour l'option d'association de marqueur d'arrêt.

L'utilisateur peut ensuite forcer l'analyse d'une partie (branche) de l'arbre de diagnostic bien qu'il y ait des résultats négatifs. Cela permet de poursuivre le raisonnement au niveau de cette branche (de la cause correspondante et donc de l'enchaînement) alors que ladite branche aurait dû être éliminée. Pour ce faire, et donc pour vérifier que le diagnostic peut trouver un problème, l'utilisateur arrête le déroulement au niveau d'un noeud. Si les données terrain lues ne correspondent pas au problème recherché, on modifie ces données (en créant un pseudo problème terrain) et on relance l'exécution du diagnostic. Dans l'exemple illustré sur la figure 6, on a arrêté le déroulement au niveau du noeud « C » (couverture de cellule) qui est associé à une valeur d'analyse dont on sait pertinemment qu'elle entraîne un résultat de test(s) négatif. C'est la raison pour laquelle la forme géométrique qui matérialise le noeud « C » est ici un trait en pointillés.

Ce forçage est destiné à tester des valeurs de paramètre ou d'indicateur (données d'analyse) spécifiques au niveau de l'un au moins des autres noeuds de l'arbre de diagnostic en cours d'élaboration.

Par exemple, l'utilisateur peut imposer que le module de contrôle MC teste le noeud « Drop BSS » avec une valeur d'indicateur de taux d'interruption d'appel dû au BSS (ou « call drop BSS rate ») égale à 0,8%. L'utilisateur peut alors demander à l'interface homme/machine IHM d'afficher la représentation graphique du résultat du test du noeud « Drop BSS » sur l'écran. Cette représentation est illustrée dans la fenêtre de gauche de la figure 7. Ici, on constate que le résultat du test est négatif du fait que la ligne d'encadrement de la forme géométrique qui représente le noeud de test(s) est en pointillés.

L'utilisateur peut alors imposer une nouvelle valeur d'indicateur de taux d'interruption d'appel dû au BSS (ici égale à 3%) au moyen de l'interface homme/machine IHM, puis ordonner au module de contrôle MC d'effectuer de nouveau le(s) test(s) du noeud « Drop BSS » avec la nouvelle valeur d'indicateur. L'utilisateur peut ensuite demander à l'interface homme/machine IHM d'afficher la représentation graphique du résultat de ce nouveau test du noeud « Drop BSS » sur l'écran. Cette représentation est illustrée dans la fenêtre de droite de la figure 7. Ici, on constate que le résultat du (des) test(s) est positif du fait que la ligne d'encadrement de la forme géométrique qui représente le noeud de test(s) est en trait continu simple.

Les valeurs des données d'analyse, qui sont imposées au niveau de certains au moins des noeuds d'un arbre de diagnostic en cours d'élaboration, peuvent être soit définies par l'utilisateur via l'interface homme/machine IHM, soit sélectionnées (ou choisies) par l'utilisateur parmi des données d'analyse réelles stockées dans la base de données d'analyse BDA. Cela permet en effet de confronter un scénario (ou arbre) à la réalité pendant sa phase de conception.

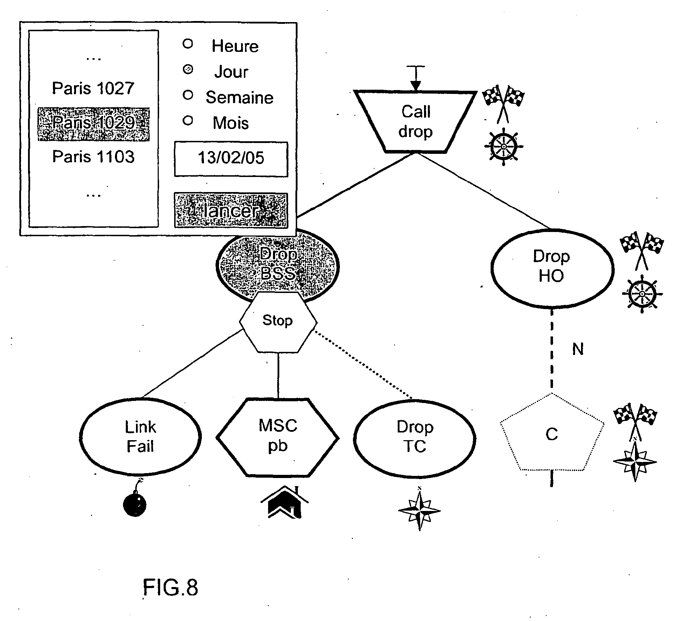

Un exemple de sélection est illustré sur la figure 8, dans le cas d'une portion d'arbre de diagnostic en cours d'élaboration identique à celui présenté ci-avant en référence à la figure 6. Ici, l'utilisateur décide de sélectionner le noeud « Drop BSS » afin de lui associer une donnée d'analyse réelle. Cela peut se faire, par exemple, en cliquant sur le noeud puis en sélectionnant dans un menu contextuel qui s'affiche en retour l'option d'association de données d'analyse réelles. L'interface homme/machine IHM provoque alors l'affichage sur l'écran d'une fenêtre du type de celle illustrée dans la partie supérieure gauche de la figure 8. L'utilisateur peut alors sélectionner avec son curseur les données d'analyse qu'il veut imposer au niveau du noeud « Drop BSS », lesquelles sont stockées dans la base de données d'analyse BDA. Ici, l'utilisateur décide de sélectionner les données d'analyse obtenues pour la date 13/02/05 pour la cellule « Paris 1029 » en sélectionnant (cliquant sur) la cellule correspondante dans la liste de cellules proposée et en choisissant une date (en variante l'utilisateur aurait pu sélectionner une heure, un jour, une semaine ou un mois), puis il lance le(s) test(s) avec la valeur correspondante en cliquant avec sa souris sur l'icône « lancer ».

Le lancement du (des) test(s) peut se faire soit au niveau du noeud de l'arbre de diagnostic en cours d'élaboration pour lequel il vient d'imposer des valeurs de données d'analyse, soit au niveau d'un noeud placé en amont de ce dernier.

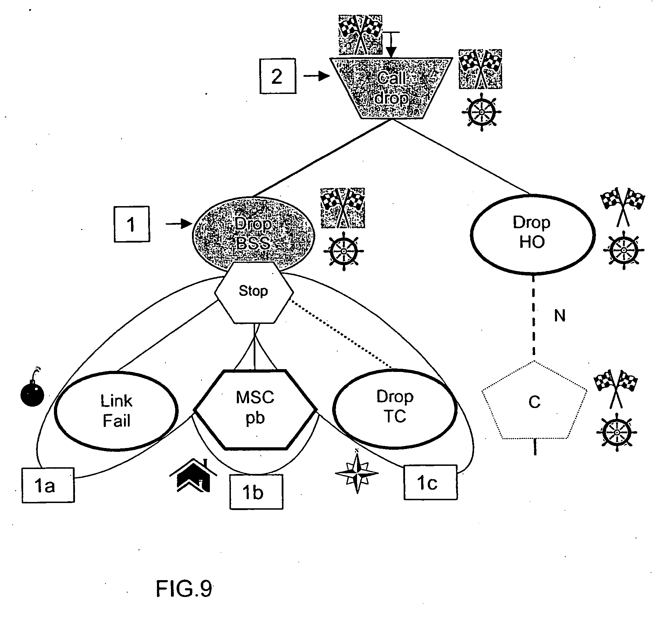

Par ailleurs, le(s) test(s) peu(ven)t être lancé(s) en mode pas à pas, comme illustré sur la figure 9. Plus précisément, dans le mode pas à pas les noeuds qui sont couplés à un noeud amont peuvent être utilisés les uns à la suite des autres, puis, on peut remonter d'un niveau vers l'amont afin de relancer l'ensemble des tests. Dans l'exemple illustré sur la figure 9, on utilise tout d'abord le noeud « Link fail » (1a), puis le noeud « MSC pb » (1 b), puis le noeud « Drop TC » (1c), compte tenu des valeurs de données d'analyse imposées, puis on recommence l'ensemble des tests au niveau du premier noeud « Call drop » (2).

Cela permet de tester les unes après les autres les branches d'un arbre de diagnostic en cours d'élaboration, et donc d'optimiser sa conception et son utilisation future.

Bien que cela ne soit pas représenté sur la figure 1, l'outil de diagnostic OD comporte de préférence toutes les fonctions de détection et de résolution d'erreurs (« debugger ») habituelles.

Le module de traitement MT, une partie du module d'affichage MA, une partie de l'interface homme/machine IHM, et l'éventuel module de contrôle MC, de l'outil de diagnostic OD, peuvent être réalisés sous la forme de circuits électroniques, de modules logiciels (ou informatiques), ou d'une combinaison de circuits et de logiciels.

L'invention ne se limite pas aux modes de réalisation d'outil de diagnostic décrits ci-avant, seulement à titre d'exemple, mais elle englobe toutes les variantes que pourra envisager l'homme de l'art dans le cadre des revendications ci-après.

## Revendications

1. Outil de diagnostic (OD) pour un réseau de communication (RC), ledit outil (OD) étant propre à analyser des données d'analyse dudit réseau (RC) au moyen d'arbres de diagnostic constitués de noeuds associés chacun à un ensemble d'au moins un test de réseau et reliés entre eux par des branches représentatives de relations logiques entre tests, de manière à délivrer des rapports de diagnostic décrivant des causes de problème(s) au sein dudit réseau (RC), **caractérisé en ce qu'**il comprend des moyens de traitement (MT) agencés, en cas d'utilisation d'une partie au moins d'un arbre de diagnostic pour un test, pour associer à certains au moins des noeuds et/ou liens de ladite partie utilisée, des données d'information représentatives du résultat du test du noeud ou lien considéré et correspondant a des niveaux d'importance choisis, la précision des données d'information qui sont associées à un noeud ou un lien croissant lorsque le niveau d'importance correspondant décroît, et des moyens d'affichage (MA) agences pour afficher sélectivement une représentation graphique des noeuds et/ou liens de ladite partie utilisée représentative d'une partie au moins dés résultats dudit test, fonction d'au moins un niveau d'importance choisi.

2. Outil de diagnostic selon la revendication 1, **caractérisé en ce qu'**il comprend des moyens de contrôle (MC) agencés pour effectuer des tests dans des arbres de diagnostic en cours d'élaboration et délivrer les résultats desdits tests auxdits moyens de traitement (MT), et **en ce que** lesdits moyens d'affichage (MA) sont agencés pour afficher sélectivement une représentation graphique des noeuds et/ou liens d'au moins une partie testée d'un arbre de diagnostic en cours d'élaboration, représentative d'une partie au moins des résultants dudit test, fonction d'au moins un niveau d'importance choisi.

3. Outil de diagnostic selon l'une des revendications 1 et 2, **caractérisé en ce qu'**il comprend des moyens d'interfaçage homme/machine (IHM) agencés pour permettre à un utilisateur de sélectionner un noeud affiché et pour afficher en retour un menu contextuel permettant d'accéder au moins à une description dudit noeud sélectionné et des valeurs de données d'analyse utilisées pour ce noeud.

4. Outil de diagnostic selon la revendication 3, **caractérisé en ce que** lesdits moyens d'interfaçage homme/machine (IHM) sont agencés pour permettre l'affichage en retour d'une représentation graphique d'un noeud affiché et des noeuds qui dépendent de ce dernier, représentative d'une partie au moins des résultats dudit test sur ce noeud et sur les noeuds dépendant, fonction d'au moins un niveau d'importance choisi.

5. Outil de diagnostic selon l'une des revendications 3 et 4, **caractérisé en ce que** lesdits moyens d'interfaçage homme/machine (IHM) sont agencés pour permettre à un utilisateur de positionner un curseur sur un noeud affiché et pour afficher en retour toutes les données d'information représentatives du résultat du test dudit noeud.

6. Outil de diagnostic selon la revendication 2 en combinaison avec l'une des revendications 3 à 5, **caractérisé en ce que** lesdits moyens d'interfaçage homme/machine (IHM) sont agencés pour permettre à un utilisateur de sélectionner un noeud affiché d'un arbre de diagnostic en cours d'élaboration de manière à placer un marqueur d'arrêt au niveau de ce noeud, puis à choisir au moins une valeur de donnée d'analyse à imposer au niveau dudit noeud sélectionné et/ou d'au moins un autre noeud de l'arbre de diagnostic auquel il appartient, et **en ce que** lesdits moyens de contrôle (MC) sont agencés pour effectuer un test d'au moins un noeud choisi dudit arbre de diagnostic en cours d'élaboration compte tenu des valeurs de données d'analyse imposées en chacun de ses noeuds et délivrer les résultats dudit test auxdits moyens de traitement (MT) afin qu'une partie au moins desdits résultats puissent être affichée sous la forme d'une représentation graphique par lesdits moyens d'affichage (MA).

7. Outil de diagnostic selon la revendication 6, **caractérisé en ce que** lesdits moyens d'interfaçage homme/machine (IHM) sont agencés pour permettre à un utilisateur de définir certaines au moins des valeurs de données d'analyse à imposer et/ou de choisir certaines au moins des valeurs de donnée d'analyse parmi des valeurs de données d'analyse réelles stockées dans des moyens de mémorisation (BDA).

8. Outil de diagnostic selon l'une des revendications 6 et 7, **caractérisé en ce que** lesdits moyens de contrôle (MC) sont agencés pour effectuer un test en mode pas à pas et pour communiquer les résultats de chaque pas dudit test auxdits moyens de traitement (MT) afin qu'une partie au moins des résultats de chaque pas puisse être affichée sous la forme d'une représentation graphique par lesdits moyens d'affichage (MA).

9. Outil de diagnostic selon l'une des revendications 1 à 8, **caractérisé en ce que** ledit niveau d'importance choisi est initialement le niveau le plus élevé.

10. Outil de diagnostic selon la revendication 9, **caractérisé en ce que** la précision des données d'information croit lorsque le niveau d'importance correspondant décroît.

11. Outil de diagnostic selon l'une des revendications 9 et 10, **caractérisé en ce que** les données d'information correspondant au niveau d'importance le plus élevé sont choisies dans un groupe comprenant au moins des types de noeud, des types de résultat de test au niveau d'un noeud, des types de données d'analyse testées, et des types de relation entre noeuds voisins.

12. Outil de diagnostic selon la revendication 11, **caractérisé en ce que** les différents types de noeud sont choisis dans un groupe comprenant au moins un premier noeud, un noeud disposant d'une proposition d'action correctrice, un noeud disposant d'une proposition de test externe, un noeud dédié exclusivement au test, et un noeud lié à un autre arbre de diagnostic.

13. Outil de diagnostic selon l'une des revendications 11 et 12, **caractérisé en ce que** les différents types de noeud sont représentés par des formes géométriques différentes.

14. Outil de diagnostic selon l'une des revendications 11 à 13, **caractérisé en ce que** les différents types de résultat de test au niveau d'un noeud sont choisis dans un groupe comprenant au moins un test localement positif, un test localement négatif, un test localement impossible à effectuer, et un test localement non effectué.

15. Outil de diagnostic selon l'une des revendications 11 à 14, **caractérisé en ce que** les différents types de résultat de test au niveau d'un noeud sont représentés par des couleurs différentes.

16. Outil de diagnostic selon l'une des revendications 11 à 15, **caractérisé en ce que** les différents types de données d'analyse testées sont choisis dans un groupe comprenant au moins des données géographiques, une valeur de paramètre, une information de classe, des données de qualité de service ou de trafic, des données de topologie de réseau et des alarmes.

17. Outil de diagnostic selon l'une des revendications 11 à 16, **caractérisé en ce que** les différents types de données d'analyse testées sont représentés par des signes différents.

18. Outil de diagnostic selon l'une des revendications 11 à 17, **caractérisé en ce que** les différents types de relation entre noeuds voisins sont représentés par des types de trait différents.

## Claims

1. A diagnostic tool (OD) for a communication network (RC), said tool (C) being capable of analyzing analysis data of said network (RC) by means of diagnostic trees made up of nodes each associated with a set of at least one network test and connected to one another by branches representative of logical relationships between tests, so as to deliver diagnostic reports describing the causes of the problem(s) within said network (RC), **characterized in that** it comprises processing means (MT) configured, if at least part of a diagnostic tree is used for a test, to associate at least some of the nodes and/or links of said used part with information data representative of the results of the test of the node or link in question and corresponding to chosen levels of importance, the accuracy of the information data which is associated with a node or a link increasing as the corresponding level of importance decreases, and display means (MA) configured to selectively display a graphical depiction of the nodes and/or links of said used part representative of at least part of the results of said test, as a function of a chosen level of importance.

2. A diagnostic tool according to claim 1, **characterized in that** it comprises control means (MC) configured to carry out tests within diagnostics trees which are being created and to deliver the results of said tests to said processing means (MT), and **in that** said processing means (MA) are configured to selectively display a graphical depiction of the nodes and/or links of at least one tested part of a diagnostic tree which is being created, and which is representative of at least part of the results of said test, as a function of at least one chosen level of importance.

3. A diagnostic tool according to one of the claims 1 and 2, **characterized in that** it comprises human/machine interfacing means (HMI) configured to enable a user to select a displayed node, and to display, in return, a pop-up menu for accessing at least a description of said selected node and values of analysis data used for that node.

4. A diagnostic tool according to claim 3, **characterized in that** said human/machine interfacing means (HMI) are configured to enable the displaying, in return, of a graphical depiction of a displayed node and of the nodes which depend on it, representative of at least part of the results of said test conducted on that node and on the dependent nodes, as a function of at least one chosen level of importance.

5. A diagnostic tool according to one of the claims 3 and 4, **characterized in that** said human/machine interfacing means (HMI) are configured to enable a user to position the cursor over a displayed node and to display, in return, all of the information data representative of the results of the test of said node.

6. A diagnostic tool according to claim 2 in combination with one of the claims 3 to 5, **characterized in that** said human/machine interfacing means (HMI) are configured to enable a user to select a displayed node of a diagnostic tree which is being created so as to place a stop marker within that node, then to choose at least one analysis data value to impose on said selected node and/or at least one other node into the diagnostic tree to which it belongs, and **in that** said control means (MC) are configured to conduct a test of at least one chosen node from said diagnostic tree which is being created, given the analysis data values which are imposed at each of its nodes and to deliver the results of said test to said processing means (MT) so that at least part of said results can be displayed in the form of a graphical depiction by said display means (MA).

7. A diagnostic tool according to claim 6, **characterized in that** said human/machine interfacing means (HMI) are configured to enable a user to define at least some of the analysis data values to impose and/or to choose at least some of the analysis data values from among the actual analysis data values stored in the memorization means (BDA).

8. A diagnostic tool according to one of the claims 6 and 7, **characterized in that** said control means (MC) are configured to conduct a test in step-by-step mode and to communicate the results of each step of said test to said processing means (MT) so that at least part of the results of each step can be displayed in the form of a graphical depiction by said display means (MA).

9. A diagnostic tool according to one of the claims 1 to 8, **characterized in that** said chosen level of importance is initially the highest level.

10. A diagnostic tool according to claim 9, **characterized in that** the accuracy of the information data increases when the corresponding level of importance decreases.

11. A diagnostic tool according to one of the claims 9 and 10, **characterized in that** the information data corresponding to the highest level of importance is chosen from a group comprising at least the types of nodes, the types of test results within a node, the types of analysis data tested, and the types of relationships between neighboring nodes.

12. A diagnostic tool according to claim 11, **characterized in that** the different types of nodes are chosen from a group comprising at least a first node, a node having a corrective action proposal, a node having an external test proposal, a node devoted exclusively to the test, and a node connected to another diagnostic tree.

13. A diagnostic tool according to one of the claims 11 and 12, **characterized in that** the different types of nodes are depicted by different geometric shapes.

14. A diagnostic tool according to one of the claims 11 to 13, **characterized in that** the different types of test results within a node are chosen from a group comprising at least a locally positive test, a locally negative tests, a locally impossible-to-conduct test, and a locally not-conducted test.

15. A diagnostic tool according to one of the claims 11 to 14, **characterized in that** the different types of test results within a node are depicted by different colors.

16. A diagnostic tool according to one of the claims 11 to 15, **characterized in that** the different types of analysis data tested are chosen from a group comprising at least geographic data, a parameter value, class information, quality of service or traffic data, network topology data, and alarms.

17. A diagnostic tool according to one of the claims 11 to 16, **characterized in that** the different types of tested analysis data are depicted by different symbols.

18. A diagnostic tool according to one of the claims 11 to 17, **characterized in that** the different types of relationships between neighboring nodes are depicted by different types of lines.

## Patentansprüche

1. Diagnose-Tool (OD) für ein Kommunikationsnetzwerk (RC), wobei das besagte Tool (OD) dazu bestimmt ist, anhand von Diagnosebäumen bestehend aus Knoten, welche jeweils einem Satz von mindestens einem Netzwerktest zugeordnet und über Zweige, welche für die logischen Beziehungen zwischen Tests repräsentativ sind, miteinander verbunden sind, Analysedaten des besagten Netzwerks (RC) zu analysieren, um Diagnoseberichte zu erstellen, welche die Ursachen von Problemen innerhalb des besagten Netzwerks (RC) beschreiben, **dadurch gekennzeichnet, dass** es Verarbeitungsmittel (MT), welche dazu ausgelegt sind, im Fall der Verwendung zumindest eines Teils eines Diagnosebaums für einen Test, Informationsdaten, welche für das Testergebnis des betroffenen Knotens oder Links repräsentativ sind und den gewählten Wichtigkeitsstufen entsprechen, mit zumindest bestimmten der Knoten und/oder Links des besagten verwendeten Teils zu assoziieren, wobei sich die Präzision der mit einem Knoten oder Link assoziierten Informationsdaten erhöht, wenn sich die entsprechende Wichtigkeitsstufe verringert, sowie Anzeigemittel (MA), welche dazu ausgelegt sind, selektiv eine grafische Darstellung der Knoten und/oder Links des besagten benutzten Teils, welche zumindest für einen Teil des Ergebnisses des besagten Tests repräsentativ ist, gemäß mindestens einer ausgewählten Wichtigkeitsstufe anzuzeigen, umfasst.

2. Diagnose-Tool nach Anspruch 1, **dadurch gekennzeichnet, dass** es Steuermittel (MC) umfasst, welche dazu ausgelegt sind, Tests in sich in Aufbau befindlichen Diagnosebäumen durchzuführen und die Ergebnisse der besagten Tests an die besagten Verarbeitungsmittel (MT) zu liefern, und dass die besagten Anzeigemittel dazu ausgelegt sind, selektiv eine grafische Darstellung der Knoten und/oder Links mindestens eines getesteten Teils eines sich in Aufbau befindlichen Diagnosebaums, welche zumindest für einen Teil der Ergebnisse des besagten Tests repräsentativ ist, gemäß mindestens einer ausgewählten Wichtigkeitsstufe anzuzeigen.

3. Diagnose-Tool nach einem der Ansprüche 1 und 2, **dadurch gekennzeichnet, dass** es Mensch-Maschine-Schnittstellenmittel (IHM) umfasst, welche es einem Benutzer ermöglichen, einen angezeigten Knoten auszuwählen und im Gegenzug ein Kontextmenü anzuzeigen, welches es ermöglicht, auf zumindest eine Beschreibung des besagten ausgewählten Knotens und auf für diesen Knoten verwendete Analysedatenwerte zuzugreifen.

4. Diagnose-Tool nach Anspruch 3, **dadurch gekennzeichnet, dass** es die besagten Schnittstellenmittel (IHM) ermöglichen, im Gegenzug eine grafische Darstellung eines angezeigten Knotens und der von diesem abhängigen Knoten anzuzeigen, welche für zumindest einen Teil der Ergebnisse der besagten Tests an diesem Knoten und an den von diesem abhängigen Knoten repräsentativ ist, gemäß mindestens einer ausgewählten Wichtigkeitsstufe anzuzeigen.

5. Diagnose-Tool nach einem der Ansprüche 3 und 4, **dadurch gekennzeichnet, dass** die besagten Mensch-Maschine-Schnittstellenmittel (IHM) dazu ausgelegt sind, es einem Benutzer zu ermöglichen, einen Cursor auf einen angezeigten Knoten zu richten und im Gegenzug alle für das Ergebnis des Tests des besagten Knotens repräsentativen Informationsdaten anzuzeigen.

6. Diagnose-Tool nach Anspruch 2 in Kombination mit einem der Ansprüche 3 bis 5, **dadurch gekennzeichnet, dass** die besagten Mensch-Maschine-Schnittstellenmittel (IHM) dazu ausgelegt sind, es einem Benutzer zu ermöglichen, einen angezeigten Knoten eines sich in Aufbau befindlichen Diagnosebaums auszuwählen, um an diesem Knoten einen Stopp-Marker zu platzieren, und anschließend mindestens einen an dem besagten ausgewählten Knoten und/oder mindestens einem anderen Knoten des Diagnosebaums, welchem er angehört, anzuwendenden Analysendatenwert auszuwählen, und dass die besagten Steuermittel (MC) dazu ausgelegt sind, einen Test mindestens eines ausgewählten Knotens des besagten sich in Aufbau befindlichen Diagnosebaums unter Berücksichtigung der an einem jeden seiner Knoten angewendeten Analysedatenwerte durchzuführen und die Ergebnisse des besagten Tests an die besagten Verarbeitungsmittel (MT) zu liefern, so dass zumindest ein Teil der besagten Ergebnisse in der Form einer grafischen Darstellung an den besagten Anzeigemitteln (MA) angezeigt werden kann.

7. Diagnose-Tool nach Anspruch 6, **dadurch gekennzeichnet, dass** die besagten Mensch-Maschine-Schnittstellenmittel (IHM) dazu ausgelegt sind, es einem Benutzer zu ermöglichen, zumindest bestimmte der anzuwendenden Analysedatenwerte zu definieren und/oder zumindest bestimmte der Analysedatenwerte unter den in den Speichermitteln (BDA) gespeicherten tatsächlichen Analysedatenwerten auszuwählen.

8. Diagnose-Tool nach einem der Ansprüche 6 und 7, **dadurch gekennzeichnet, dass** die besagten Steuermittel (MC) dazu ausgelegt sind, einen Test im Schritt-für-Schritt-Modus durchzuführen und die Ergebnisse eines jeden Schrittes des besagten Test an die besagten Verarbeitungsmittel (MT) zu übermitteln, so dass zumindest ein Teil der Ergebnisse eines jeden Schrittes in der Form einer grafischen Darstellung an den besagten Anzeigemitteln (MA) angezeigt werden kann.

9. Diagnose-Tool nach einem der Ansprüche 1 bis 8, **dadurch gekennzeichnet, dass** die besagte ausgewählte Wichtigkeitsstufe ursprünglich die höchste Stufe ist.

10. Diagnose-Tool nach Anspruch 9, **dadurch gekennzeichnet, dass** sich die Präzision der Informationsdaten erhöht, wenn sich die entsprechende Wichtigkeitsstufe verringert.

11. Diagnose-Tool nach einem der Ansprüche 9 und 10, **dadurch gekennzeichnet, dass** die Informationsdaten, welche der höchsten Wichtigkeitsstufe entsprechen, in einer Gruppe mindestens bestehend aus Typen der Knoten, Typen der Ergebnisse des Tests an einem Knoten, Typen der getesteten Analysedaten und Typen der Beziehung zwischen benachbarten Knoten gewählt werden.

12. Diagnose-Tool nach Anspruch 11, **dadurch gekennzeichnet, dass** die verschiedenen Typen der Knoten in einer Gruppe bestehend aus mindestens einem ersten Knoten, einem Knoten, welcher über einen Vorschlag für eine Korrekturmaßnahme verfügt, einem Knoten, welcher über einen Vorschlag für einen externen Test verfügt, einem ausschließlich für den Test bestimmten Knoten und einem an einen anderen Diagnosebaum gebundenen Knoten gewählt werden.

13. Diagnose-Tool nach einem der Ansprüche 11 und 12, **dadurch gekennzeichnet, dass** die verschiedenen Knotentypen in verschiedenen geometrischen Formen dargestellt werden.

14. Diagnose-Tool nach einem der Ansprüche 11 bis 13, **dadurch gekennzeichnet, dass** die verschiedenen Typen des Ergebnisses des Tests an einem Knoten in einer Gruppe bestehend aus mindestens einem lokal positiven Test, einem lokal negativen Test, einem lokal nicht durchführbaren Test und einem lokal nicht durchgeführten Test gewählt werden.

15. Diagnose-Tool nach einem der Ansprüche 11 bis 14, **dadurch gekennzeichnet, dass** die verschiedenen Typen des Ergebnisses des Tests an einem Knoten in verschiedenen Farben dargestellt werden.

16. Diagnose-Tool nach einem der Ansprüche 11 bis 15, **dadurch gekennzeichnet, dass** die verschiedenen Typen der getesteten Analysedaten in einer Gruppe bestehend aus mindestens geografischen Daten, einem Parameterwert, einer Klasseninformation, Dienstgüte- oder Verkehrsdaten, Daten der Topologie des Netzwerks und der Alarme gewählt werden.

17. Diagnose-Tool nach einem der Ansprüche 11 bis 16, **dadurch gekennzeichnet, dass** die verschiedenen Typen der getesteten Analysedaten durch verschiedene Zeichen dargestellt werden.

18. Diagnose-Tool nach einem der Ansprüche 11 bis 17, **dadurch gekennzeichnet, dass** die verschiedenen Typen der Beziehung zwischen benachbarten Knoten durch verschiedene Strichtypen dargestellt werden.
